# EUROPEAN PATENT APPLICATION

(11) **EP 1 826 698 A2**
(43) Date of publication of application: **29.08.2007**
(21) Application number: 07101687.7
(22) Date of filing: 02.02.2007
(51) Int. Cl.: G06F 21/00

(54) **Portable storage and method for managing data thereof**

(30) Priority: 28.02.2006 KR 20060019561
(71) Applicant: SAMSUNG ELECTRONICS CO., LTD., Suwon-si Gyeonggi-do 442-742 (KR)
(72) Inventor: Oh, Yun-sang 8-703, Gaepo Hanshin APT,, Seoul (KR)
(74) Representative: Benson, Christopher

(57) **Abstract**

A portable storage is provided. The storage includes a plurality of authentication modules (350-1,350-2...350-M) that perform mutual authentication using different mutual authentication algorithms; a control module (330) that controls the authentication modules (350-1,350-2...350-M) so that any one among the authentication modules (350-1,350-2...350-M) can perform mutual authentication work with a host device (200) through the DRM system identifier extracted from an authentication-request message received from the host device (200); and an object-management module (340) that protects communication with the host device (200) using a generated session key as a result of the mutual authentication.

## Description

Methods and apparatuses consistent with the present invention relate to digital rights management (DRM). More particularly, the present invention relates to a portable storage and a method for managing data of the portable storage for the digital rights management.

Research on digital rights management (DRM) is being actively conducted, and commercial services using DRM have been introduced or are being prepared to be introduced. DRM is a technological concept for protecting digital content which can be easily copied and distributed.

There have been efforts to protect digital content, and related art technologies have been focused on preventing unauthorized access to digital content. For example, access to digital content has been allowed only to users who have paid for the content. However, digital content can be easily re-used, processed, copied, and distributed. Hence, when a paying user copies and distributes the content without permission, users who did not pay for the content can use the digital content.

In order to solve this problem, digital content needs to be encrypted before being distributed, and there should be a license, called Rights Object (RO), in order to use the encrypted digital content.

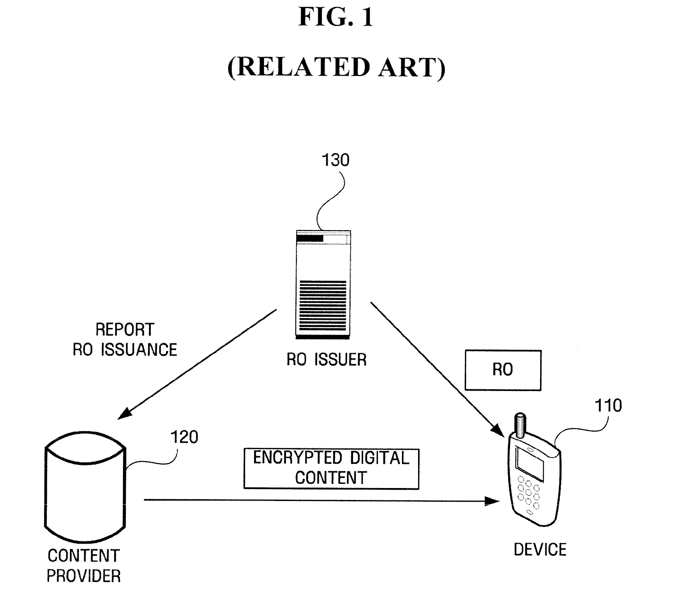

Referring to Figure 1, a device 110 can get digital content from a content provider 120. Here, the digital content provided by a content provider has been encrypted, and there should be a RO in order to use the encrypted digital content.

The device 110 can get a RO, in which the right to use the encrypted digital content is included, from a RO-issuing organization 130, after the user pays for it. The RO includes a key that can decrypt the encrypted digital content.

The RO-issuing organization 130 reports the RO-issuing list to the content provider 120, and the RO-issuing organization 130 and the content provider 120 can be the same body depending on the situation.

The device that acquired the RO can use the encrypted digital content via the RO.

Further, the encrypted digital content can be freely copied and distributed to other devices (not shown). However, because the RO includes limit information such as the number of allowed uses of the encrypted digital content or the period of use of the encrypted digital content, the number of allowed copies of the RO, and others, there are limitations in the use of ROs, unlike encrypted digital content. Such DRM technology effectively protects digital content.

Because of the advantages of DRM technology, many content providers are securing DRM technology in order to protect their content, and it is expected that more DRM technology will be developed.

Further, in the aforementioned related art technology, the device 110 stores all the information necessary for DRM such as encrypted digital content and the RO. However, recently such information has been stored in various types of portable storages, and thus technologies that make the use of digital content more convenient are being developed. However, because the portable storage has little or no computational functionality compared with host devices such mobile phones and PDAs, it has been difficult to apply various DRM technologies through a portable storage.

Korean Unexamined Patent 10-2004-0053155 (Portable Information Recording Medium) discloses a technology that can execute a plurality of applications in the same communication session while changing the applications. However, this patent is a technology that can use an existing session when simply changing applications, and does not suggest a technology that can support various DRM functions within a portable storage having limited functionality.

Some exemplary embodiments of the present invention overcome the above disadvantages and problems. Some exemplary embodiments of the present invention may overcome other disadvantages and problems not described above.

According to the present invention there is provided an apparatus and method as set forth in the appended claims. Preferred features of the invention will be apparent from the dependent claims, and the description which follows.

The present invention provides a method and apparatus for supporting a plurality of Digital Rights Management (DRM) technologies in a portable storage of limited performance.

The present invention will not be limited to the technical aspects described above. Other aspects not described herein will be more definitely understood by those in the art from the following detailed description.

According to a first aspect of the present invention, there is provided a portable storage including a plurality of authentication modules that perform mutual authentication using different mutual authentication algorithms; a control module that controls the authentication modules so that any of the authentication modules can perform mutual authentication work with a host device through the DRM system identifier extracted from an authentication-request message received from the host device; and an object-management module that protects communication with the host device using a generated session key as a result of the mutual authentication.

According to another aspect of the present invention, there is provided a method of managing data of a portable storage, the method including performing a mutual authentication work with a host device using one of a plurality of authentication algorithms through a DRM system identifier extracted from a authentication-request message received from the host device; and protecting communication with the host device using a session key generated as a result of the mutual authentication.

For a better understanding of the invention, and to show how embodiments of the same may be carried into effect, reference will now be made, by way of example, to the accompanying diagrammatic drawings in which:
Figure 1 illustrates the concept of related art Digital Rights Management (DRM);
Figure 2 illustrates the connection state between a host state and a portable storage according to an exemplary embodiment of the present invention;
Figure 3 is a block diagram illustrating a portable storage according to an exemplary embodiment of the present invention;
Figure 4 is a block diagram illustrating a storage module according to an exemplary embodiment of the present invention;
Figure 5 is a block diagram illustrating an object storage area according to an exemplary embodiment of the present invention;

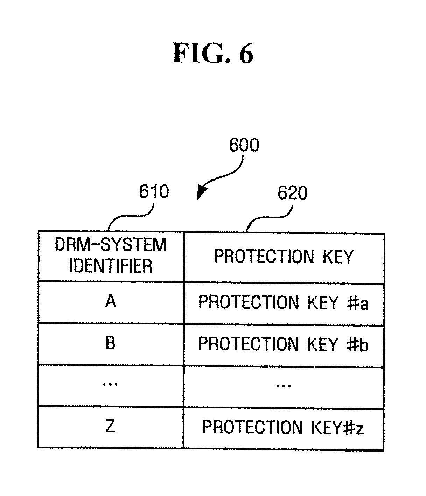

Figure 6 illustrates a protection key table according to an exemplary embodiment of the present invention;
Figure 7 is a flow chart illustrating a mutual authentication process according to an exemplary embodiment of the present invention;
Figure 8 is a flow chart illustrating a process where a portable storage is connected to a host device according to an exemplary embodiment of the present invention;
Figure 9 is a flow chart illustrating a process where information is stored in a portable device according to an exemplary embodiment of the present invention; and
Figure 10 is a flow chart illustrating a data-retrieval process according to an exemplary embodiment of the present invention.

Exemplary embodiments of the present invention will be described in detail with reference to the accompanying drawings.

The present invention may be understood more readily by reference to the following detailed description of exemplary embodiments and the accompanying drawings. The present invention may, however, be embodied in many different forms and should not be construed as being limited to the exemplary embodiments set forth herein. Rather, these embodiments are provided so that this disclosure will be thorough and complete and will fully convey the concept of the invention to those skilled in the art, and the present invention will only be defined by the appended claims. Like reference numerals refer to like elements throughout the specification.

First, terms used in the present invention are briefly described. The description on the terms is to aid in understanding the present invention. Hence, unless a certain term is clearly stated in a limited manner, the description on the terms below should not limit the technological concept of the exemplary embodiments of the present invention.

### Host Device

A host device refers to a device that can be connected to a portable storage, and can play back a content object by using a Rights Object (RO). The host device can be a portable content-playback device such as a mobile phone, a PDA or an MP3 player, or a fixed-type content-playback device such as a desktop computer or a digital TV.

### Portable Storage

A portable storage refers to a storage device that includes nonvolatile memory that can be read, written to, and have data deleted from, such as a flash memory, has predetermined computational functionality, and can be easily connected and disconnected to a host device. Some examples of a mobile storage device are smart media, a memory stick, a CF card, an XD card, and a multimedia card.

### Content Object

A content object is an encrypted digital object. Here, the digital content is not limited to video, audio, a still image, a game, and text.

### Rights Object (RO)

A RO is a kind of license allowing use of a content object. The RO includes a content-encryption key, permission information, constraint information, and a content-object identifier that can identify the content object capable of being played back using the content-encryption key.

### Permission Information

The permission information is a key that can play back a content object, and can be in the predetermined binary form. For example, the content-encryption key can be decrypted and used in acquiring original content.

Some examples of the ways of playing back are Play, Display, Execute, and Print. Here, the Play refers to a right that expresses a content object in the form of audio or video. For example, if a content object is about video or music, Play can be set as the permission information of a RO to be consumed to play back a content object. Further, Display refers to a right to express a content object to a visual device, and Print refers to a right to generate a hard copy of a content object. For example, if a content object is about a still video, in order to play back the content object, at least one among Display and Print can be set as permission information of the RO to be consumed. Further, Execute refers to a right that can use a content object of a game or other types of application program. For example, in the case where a content object is a Java game, in order to play back the content object, Execute can be set as permission information of the RO to be used.

Further, some examples of duplication methods are copying and moving. Copying and moving is a right to store a RO stored in one device, in another device. In the case of moving, if a RO is stored in anther device, the RO stored in the original device is deactivated, but in the case of copying, even though the RO is stored in another device, the RO stored in the original device remains activated. Here, the deactivation can mean deletion of the RO.

### Constraint Information

Constraint information indicates a limit that can play back a content object, and one or more sets of information can be set for permission information. Some examples of the constraint information are a count constraint, a date-time constraint, an interval constraint, and an accumulated time constraint.

Here, the count constraint specifies how many times a content object can be played back. For example, if the count restraint of the RO is set as 10, the host device can play back the content object 10 times by using the RO.

The date-time constraint limits the date and the time when the content object can be played back, and can include at least one among a start element and an end element. In the case where the date-time constraint consumes the set RO, the host device can play back the content object after the date and the time indicated by the start element, and can play back the content object until the date and the time indicated by the end element.

The interval constraint limits the period when a content object can be played back by using a RO from the point of time when the content object is played back for the first time. For example, in the case where the period constraint is set as 1 week, if the host device plays back the content object by using a RO for the first time at XX:XX:XX, December 1, 2005, the host device can play back the content object by using the RO until XX:XX:XX, December 8, 2005.

The accumulated time constraint limits the total sum of hours for which the content object can be played back by using the RO. For example, if the accumulated time constraint is set as 10 hours, the host device can play back the content object for 10 hours by using the RO. Here, the host device is not limited in the number of times or the date of the playback of the content object by using the RO.

### State Information

The state information indicates the consumption level of a RO. For example, in the case where the constraint information on the RO is set as 10, and the host device has consumed the RO for 4 hours in order for the device to use the content object, the state information indicates the information on how many hours (4 hours) the host device has consumed the RO or how many hours (6 hours) the host device will use the content object by using the RO. The state information can be included in the RO, or can be managed as separate information along with the RO by the device that stores the RO.

### Meta-information

The meta-information is metadata on a RO, and can include at least one among data related with permission information, constraint information, and state information.

Terms that have not been explained above will be explained separately if necessary.

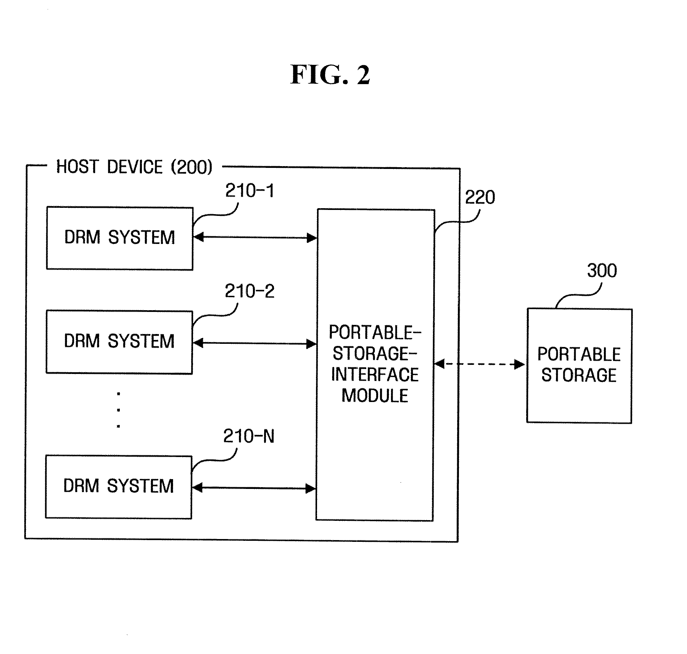

Figure 2 illustrates the connection state between a host state and a portable storage device according to an exemplary embodiment of the present invention.

A host device 200 can be connected to a portable storage 300 via a portable-storage-interface module 220, and can include one or more DRM systems 210-1 to 210-N. Here, "DRM system" is a module that executes DRM work, and each DRM system 210-1 to 210-N supports different DRM technologies.

DRM systems 210-1 to 210-N hold their own unique identifiers. This could have been allocated according to mutual agreement between providers of each DRM system 210-1 to 210-N. In the case where the host device 200 transmits DRM-related data to the portable storage 300, the identifier of DRM system in operation is transmitted along with the identifier of DRM system. As such, the portable storage can know which type of DRM system the host device 200 uses.

Hereinafter, in the case where one among a plurality of DRM systems 210-1 to 210-N is indicated, a DRM system is referred to using the format "210-x".

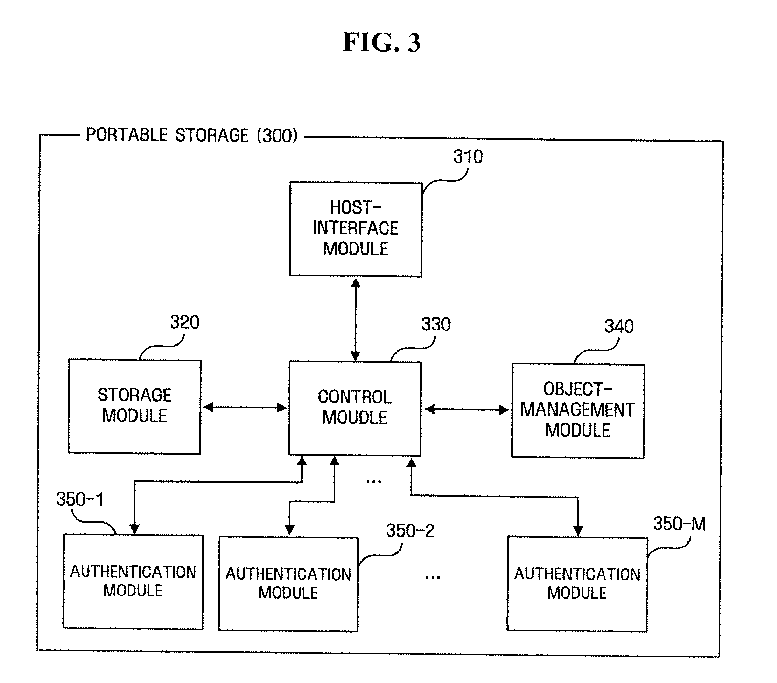

Figure 3 is a block diagram illustrating a portable storage according to an exemplary embodiment of the present invention. The illustrated portable storage 300 includes a host-interface module 310, a storage module 320, a control module 330, an object-management module 340, and a plurality of authentication modules 350-1 to 350-N. Hereinafter, when any one among the plurality of authentication modules 350-1 to 350-N is referred to, the authentication module is referred to as "350-x".

The host interface module 310 transmits data to the host device 200, or receives data from the host device 200. Hence, the portable storage 300 can be connected to the host device 200 via the host-interface module 310. Here, the "connection" means an electrical connection, the state where the portable storage 300 and the host device 200 communicate with each other through a wire medium. However, this is merely exemplary, and the "connection" should include the meaning that the portable storage 300 and the host device 200 are in the state where they can communicate with each other through a wireless medium in a wireless state.

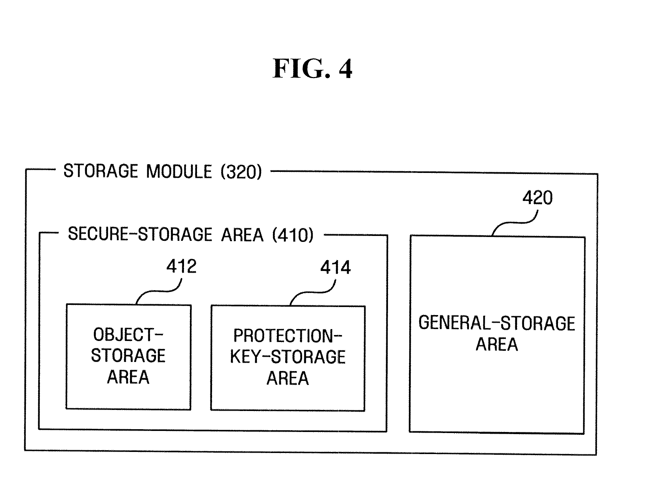

The storage module 320 stores predetermined information or data. For this, the storage module 320 includes a storage medium such as a flash memory. Preferably, the storage space held by the storage module 320 can be divided into a secure storage area 410 and a general storage area, as illustrated in Figure 4.

Data whose security is not important ("non-secure data") is stored in the general storage area 420. In contrast, data that needs to be protected ("secure data") is stored in the secure-storage area 410. The data stored in the secure-storage area 410 can be physically or logically protected from an approach by an external device or an external module.

According to an exemplary embodiment of the present invention, the secure-storage area 410 can be divided into an object-storage area 412 and a protection-key-storage area 414.

The object-storage area 412 stores data that needs to be protected among data transmitted by the host device 200, or data generated as a result of communication with the host device 200. It is possible to define in advance what data can be stored in the object-storage area 412.

The object-storage area 412 includes a plurality of object-storage slots 510-1 to 510-N.

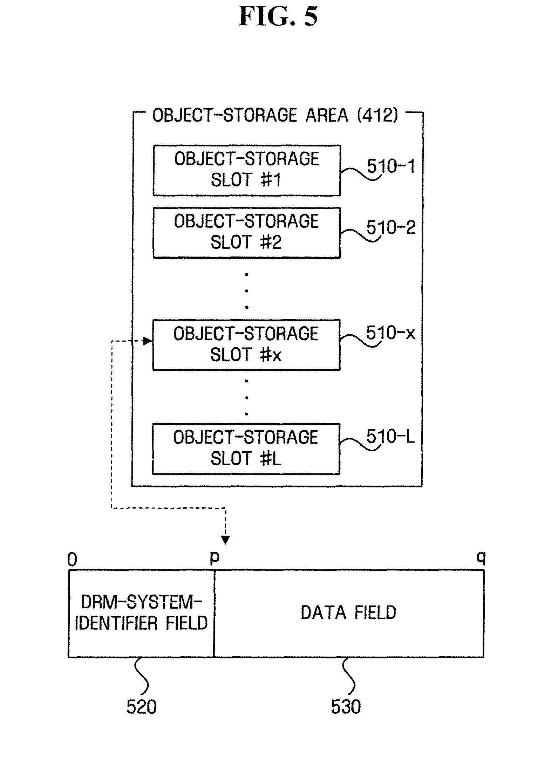

The DRM system identifier and predetermined security data are stored together in each object-storage slot. For example, as illustrated in Figure 5, a part (from the start bit to the pth bit) of an object-storage slot 510-x is a DRM-system-identifier field 520, and the remaining part (from the (p + 1)th bit to the qth bit) is a data field 530 where security data is stored. The portable storage 300 can get to know what DRM system-related data is stored in each object-storage slot 510-1 to 510-L via the DRM-system-identifier field 520.

According to an exemplary embodiment of the present invention, the object-storage slots 510 illustrated in Figure 5 can include a summary information field (not shown) as well as the DRM system-identifier field 520 and the data field 530. Here, the summary-information field can store identification information that indicates the type of data included in the data field 530. For example, by allocating 2 bits as the summary-information field, 00 (for the RO), 01 (for the state information), and 10 (for the meta-information) can be allocated. Here, since the stored data can be known without decryption, in the case where a data-retrieval request or a data-transmission request is received from the host device 200, and a certain data needs to be transmitted to the host device 200, the host device 200 can retrieve desired data using the summary-information field. If the summary-information field is used, the summary information stored in the summary-information field can be transmitted together when the host device 200 transmits data, and the information can be extracted by the control module 330.

Further, the protection-key-storage area 414 stores a predetermined protection key allocated by DRM systems. For example, the protection-key-storage area 414 can store a protection-key table 600 that includes the DRM-system identifier 610 and the protection key 620 corresponding to each DRM system. The protection key 620 corresponding to each DRM system is a unique encryption key allocated to each DRM system according to the mutual agreement between DRM-system providers. The protection key is used to protect data to be stored, in the case where data received in communication with the host device 200 is stored in the object-storage area 412 within the secure-storage area 410 of the storage module 320 according to the DRM system 210-x used by the host device 200.

Referring to Figure 3, the control module 330 controls the operation of modules 310, 320, 340, and 350-1 to 350M that constitute the portable storage 300. The control module 330 can identify the DRM-system identifier from the received information, and can determine the authentication module 350-x to be operated or can control the object-management module 340 through the confirmed DRM-system identifier.

As a result of the mutual authentication work, the object-management module 340 protects communication with the host device 200 using the generated session key. Specifically, the object-management module 340 can decrypt data received from the host device 200 using a session key, or can encrypt data to transmit to the host device 200 using a session key.

Further, the object-management module 340 can cryptologically protect data to be stored in the object-storage area 412 among the secure-storage area 410 of the storage module 320. Specifically, the object-management module 340 encrypts data to be stored in the object-storage area 412, using the protection key, and in the case where the encrypted data stored in the object-storage area 412 is provided to the host device 200, the data is decrypted using the protection key. Here, the used protection key can be determined according to the DRM system used by the host device 200, and the type of DRM system can be known through the DRM system identifier received from the host device 200.

Further, in the case where data is stored in the object-storage area 412, the object-storage module 340 can store the related DRM-system identifier in the same object-storage slot as the data in order to confirm which DRM system the to-be-stored data is related to.

As an exemplary embodiment of the present invention, the object-management module 340 can use a symmetric-key cryptography method such as the Data Encryption Standard (DES) or the Advanced Encryption Standard (AES). Such an object-management module 340 can be implemented as a single module by being integrated with the control module 330.

The plurality of authentication modules 350-1 to 350-M performs mutual authentication work with the host device 200. The used mutual-authentication algorithm can be different depending on the DRM system, and the plurality of authentication modules 350-1 to 350-M use the mutual authentication algorithm used by the DRM system corresponding to each authentication module. Each authentication module 350-1 to 350-M can correspond to DRM systems 210-1 to 210-N of the host device 200. In other words, the portable storage 300 does not always hold the authentication module corresponding to all DRM systems 210-1 to 210-N, and there can be DRM systems that cannot be covered by the portable storage 30 depending on the exemplary embodiment. This can be determined according to the demand trend of the portable storage 300 at the time of manufacturing the portable storage 300, and the present invention is not limited to the types or the number of units of the authentication modules 350-1 to 350-M of the portable storage 300. In other words, the portable storage 300 can perform the DRM work with various DRM systems.

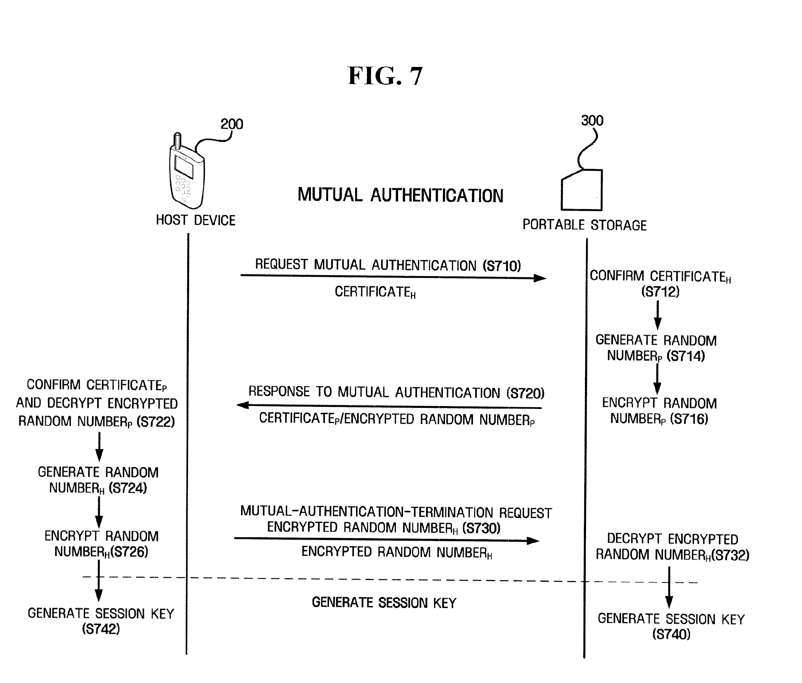

Figure 7 is a flow chart illustrating a mutual authentication process according to an exemplary embodiment of the present invention. The illustrated mutual authentication process is merely exemplary, and the present invention is not limited to this.

In the exemplary embodiments of the present embodiment, "H" refers to data that belongs to the host device 200 or has been generated by the host device 200, and "P" refers to data that belongs to the portable storage 300 or has been generated by the portable storage 300.

First, if the host device 200 and the portable storage 300 are connected, the host device 200 requests the mutual authentication to the portable storage 300 (operation S710). Here, the host device 200 can transmit a certificate_{H} issued by the authentication authority on the host device 200. The certificate_{H} includes an IDH and a public key_{H} of the host device 200, and is electronically signed.

The portable storage 300, which received the certificate_{H} of the host device 200, confirms whether the certificate_{H} is valid by using a Certificate Revocation List (CRL) (operation S712). If the certificate_{H} of the host device 200 has not been registered in the CRL, the portable storage 300 can acquire the public key_{H} of the host device 200 through the certificate_{H}.

If it is determined that the host device 200 is proper through the confirmation of the certificate_{H}, the portable storage 300 generates a random number_{P} (operation S714), and encrypts the generated random number_{P} with the public key_{H} of the host device 200 (operation S716).

The portable storage 300 performs the mutual-authentication response (operation S720). At the time of the mutual-authentication response, the portable storage 300 transmits the certificate_{P} issued on the portable storage 300 and the encrypted random number_{P}. The certificate_{P} includes the ID_{P} and the public key_{P} of the portable storage 300, and is electronically signed by the authentication authority.

The host device 200 confirms that the portable storage 300 is a proper device, through the certificate_{P}, and decrypts the encrypted random number_{P} with its own individual key_{H} (operation S722). Here, the host device 200 can acquire the public key_{P} of the portable storage 300 through the certificate_{P}. Further, the authenticationP confirmation work can be performed through the CRL as in the portable storage.

In the case where it is determined that the portable storage 300 is proper, the host device 200 generates a random number_{H} (operation S724), and encrypts the generated random number_{H} with the public key_{P} of the portable storage 300 (operation S726).

Then, the host device 200 sends a request for termination of the mutual authentication to the portable storage 300 (operation S730), and the host device 200 transmits the encrypted random number_{H}.

The portable storage 300, which receives the encrypted random number_{H}, decrypts the encrypted random number_{H} with its own individual key (operation S732).

As such, the host device 200 and the portable storage 300 share two random numbers (the random number_{H} and the random number_{P})

As a result of the mutual authentication, the host device 200 and the portable storage 300, which share two random numbers, generate a session key using the two random numbers (operations S740 and S742). Here, the host device 200 and the portable-storage device 300 use the same key-generation algorithms to generate a session key. Hence, the security can be kept in the data transmission between the host device 200 and the portable storage 300.

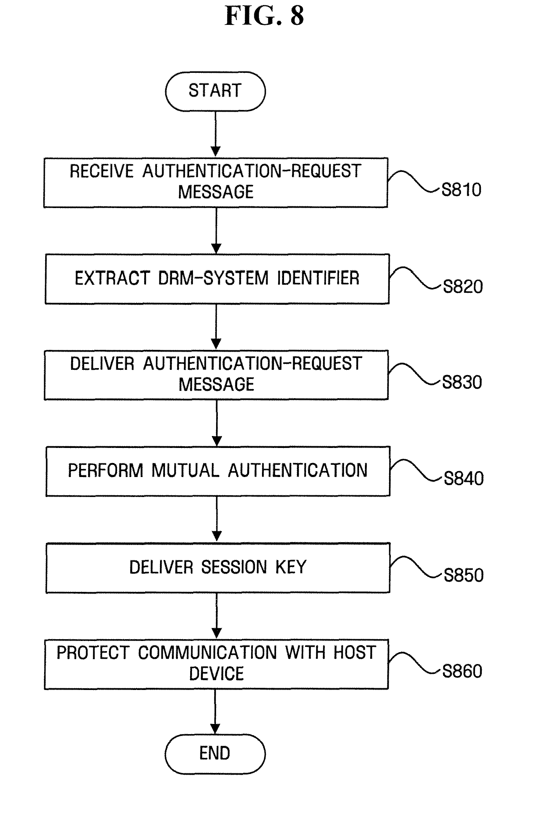

Operation of the portable storage 300 according to an exemplary embodiment of the present invention will be described with reference to Figures 8 to 10.

Figure 8 is a flow chart illustrating a process where a portable storage is connected to a host device according to an exemplary embodiment of the present invention.

First, the host device 200 determines a DRM system 210-x to be used, and transmits an authentication-request message that includes an identifier of the DRM system to the portable storage 300.

If the host-interface module 310 of the portable storage 300 receives the authentication-request message from the host device (operation S810), the control module 330 extracts the DRM-system identifier (operation S820). Here, the control module 330 can check which DRM system the host device operates through the DRM-system identifier.

The control module 330 delivers the authentication-request message to the authentication module corresponding to the DRM system identifier among the plurality of authentication modules 350-1 to 350-M (operation S830).

The authentication module 350-x, which receives the authentication-request message from the control module 330 among the plurality of authentication modules 350-1 to 350-M, performs the mutual authentication work with the DRM system 210-x of the host device 200 (operation S840). The information transmitted and received during the mutual authentication work passes the host interface module 310.

The authentication module 350-x, which completes the mutual authentication work, transmits the session key generated as a result of the mutual authentication to the object-management module 340 (operation S850).

The object-management module 340 protects communication with the host device using the session key transmitted from the authentication module 350-x (operation S860).

The object-management module 340 can store the session key transmitted from the authentication module 350-x in the object-storage area 412 within the secure-storage area 410 of the storage module 320. Here, the session key is stored along with the authentication module 350-x and the identifier of the DRM system that performed the mutual authentication work. Further, in the case where the object-management module 340 is disconnected from a certain DRM system 210-x of the host device 200, the object-management module 340 can delete the session key generated as a result of the mutual authentication work with the DRM system 210-x.

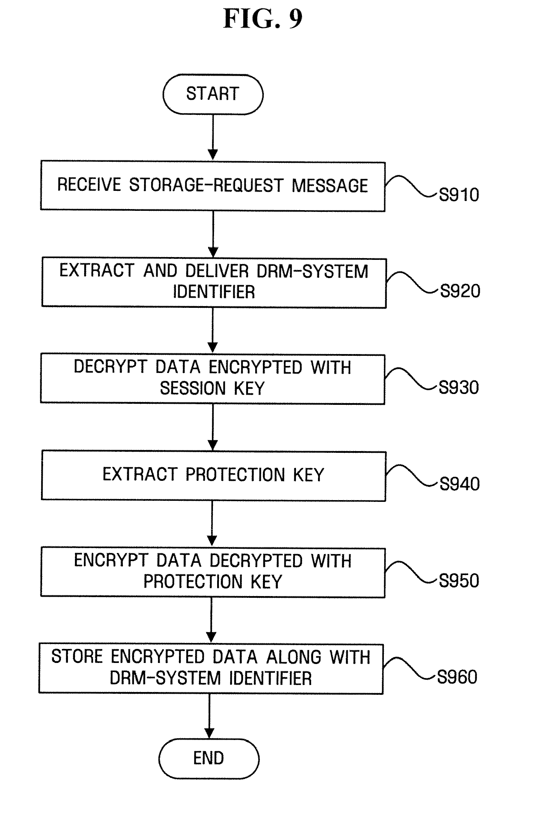

Figure 9 is a flow chart illustrating a process where information is stored in a portable device according to an exemplary embodiment of the present invention.

After the mutual authentication work is completed, in the case where a predetermined security data is stored in the portable storage 300, the DRM system 210-x of the host device 200 encrypts data to be stored by the DRM system itself, and generates the storage-request message that includes the encrypted data. Here, the host device 200 inserts the identifier of the DRM system 210-x to the storage-request message, and transmits the message to the portable storage 300.

If the host-interface module 310 receives the storage-request message from the host device 200 (operation S910), the control module 330 extracts the DRM system identifier from the storage-request message, and transmits the identifier to the object-management module 340 (operation S920).

The object-management module 340 decrypts the encrypted data included in the storage-request message using the session key corresponding to the DRM-system identifier transmitted from the control module 350 (operation S930). If the session key has been stored in the object-storage area 412 of the secure-storage area 410, the object-management module 340 can retrieve a necessary session key using the DRM-system identifier transmitted from the control module 350.

After the encrypted data is decrypted, the object-management module 340 extracts the protection key corresponding to the DRM-system identifier from the protection-key table stored in the security-key-storage area 414 (operation S940), and the decrypted data is encrypted using the extracted protection key (operation S950).

If data is encrypted, the object-management module 340 stores the encrypted data and the DRM-system identifier in an empty object-storage slot of the object-storage area 412 within the secure-storage area 410 of the storage module 320 (operation S960).

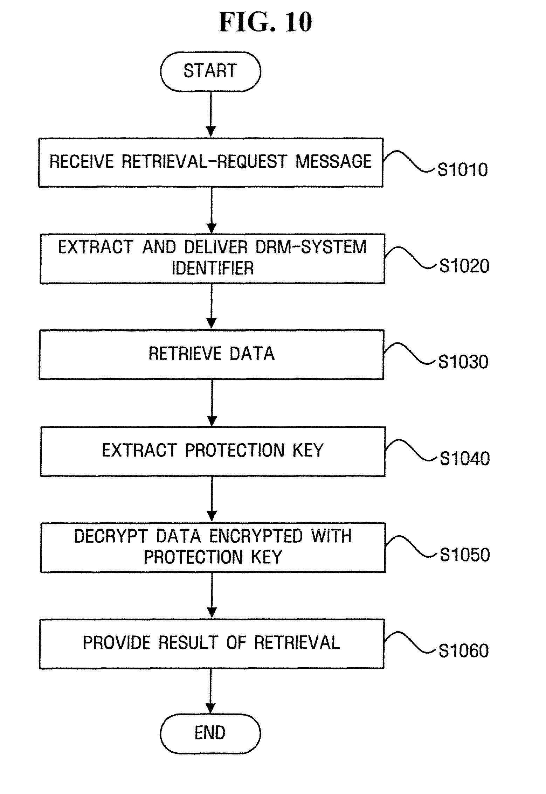

Figure 10 is a flow chart illustrating a data-retrieval process according to an exemplary embodiment of the present invention.

In the case where the host device 200 retrieves security data stored in the portable storage 300 using a predetermined DRM system 210-x, the DRM system 210-x generates a retrieval-request message. Here, the host device 200 inserts the identifier of the DRM system 210-x to the retrieval-request message, and transmits the identifier to the portable storage 300.

If the host-interface module 310 receives the retrieval-request message from the host device 200 (operation S1010), the control module 330 extracts the DRM-system identifier from the retrieval-request message, and delivers the identifier to the object-management module 340 (operation S1020).

The object-management module 340 can retrieve data related with DRM system 210-x among data stored in the object-storage area 412 within the secure-storage area 410 of the storage module 320 using the DRM-system identifier transmitted from the control module 350 (operation S1030).

Because the retrieved data is in the encrypted state with the security key, the object-management module 340 extracts the security key corresponding to the DRM system from the security key table stored in the security-key-storage area 414 (operation S1040), and the encrypted data can be decrypted using the extracted security key (operation S1050).

Then, the object-management module 340 can provide the result of the retrieval to the host device 200 (operation S1060). Here, the provision of the result of the retrieval can mean that the list of retrieved data is provided. The host device 200 can select certain data, and the object-management module 340 can transmit the selected data to the host device 200 through the host-interface module 310.

As another exemplary embodiment, the provision of the result of the retrieval in operation S1060 can mean that the retrieval data itself is transmitted to the host device 200.

In the case where the data stored in the object-storage area 412 is transmitted to the host device 200, the object-management module 340 can encrypt data to be transmitted using the session key corresponding to the DRM system identifier transmitted from the control module 330 in operation S1020.

The method and apparatus of the exemplary embodiments of the present invention has the following advantages.

First, one portable storage can support a plurality of DRM systems without having a complicated structure.

Second, a plurality of DRM systems can be supported while reducing the amount of resources needed compared with the related art.

Third, when a new system appears, the architecture of the portable storage for supporting the DRM system can be easily changed only by the development and the definition on the authentication module and the DRM-system identifier.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A portable storage (300), comprising:
a plurality of authentication modules (350-1,350-2...350-M) that perform mutual authentication using different mutual-authentication algorithms;
a control module (330) that controls the plurality of authentication modules (350-1,350-2...350-M) so that any one of the plurality of authentication modules (350-1,350-2...350-M) performs the mutual authentication with a host device (200) through a Digital Rights Management (DRM) system identifier (610) extracted from an authentication-request message received from the host device (200); and
an object-management module (340) that protects communication with the host device (200) using a session key that is generated as a result of the mutual authentication.

2. The storage of claim 1, further comprising a storage module (320) that has a plurality of object-storage slots (510,510-2...510-X) that store data received from the host device (200).

3. The storage of claim 1 or 2, wherein the object-management module (340) stores the DRM-system identifier and the session key in the storage module (320), and if predetermined encrypted data with an attached DRM system identifier is received from the host device (200), the session key is retrieved in order to decrypt the encrypted data using the DRM-system identifier attached to the encrypted data.

4. The storage of claim 1, 2 or 3, wherein the DRM-system identifier is attached to the data received from the host device (200), and the plurality of object-storage slots (510,510-2...510-X) include a DRM-identifier field (520) where each DRM system identifier is stored, and a data field (530) where the received data is stored.

5. The storage of claim 4, wherein if a data-retrieval request is received from the host device (200), the object-management module (340) retrieves data from the storage module (320) using the DRM-system identifier included in the data-retrieval-request.

6. The storage of any preceding claim, wherein the object-management module (340) protects data stored in the object-storage slot using a protection key (620) corresponding to the DRM-system identifier.

7. The storage of any of claims 2 to 6, wherein the storage module (320) comprises a protection-key table (600) that indicates a corresponding relation between the DRM-system identifier and the protection key (620), and the object-management module (340) retrieves a necessary protection key (620) from the protection-key table (600).

8. A data-management method of a portable storage, the method comprising:
performing mutual-authentication (S840) with a host device (200) using any one of a plurality of authentication algorithms using a DRM-system identifier extracted from an authentication-request message received from the host device (200); and
protecting communication with the host device (S860) using a session key generated as a result of the mutual authentication.

9. The method of claim 8, further comprising:
storing the DRM-system identifier and the session key in a secure-storage area;
retrieving a session key from the secure-storage area if encrypted data is received from the host device (200); and
decrypting (S930) the encrypted data using a DRM-system identifier attached to the encrypted data.

10. The method of claim 8 or 9, further comprising:
extracting (S920) the DRM-system identifier from a data-storage-request message; and
storing (S960) the extracted DRM-system identifier and the storage-requested data, if the data-storage-request message is received from the host device (200).

11. The method of claim 9 or 10, wherein the secure-storage area comprises a plurality of object-storage slots (510,510-2...510-X) that store data received from the host device (200).

12. The method of claim 11, wherein the plurality of object-storage slots (510,510-2...510-X) comprises a DRM-identifier field (520) where the DRM-system identifier is stored, and a data field (530) where the received data is stored.

13. The method of claim 11 or 12, further comprising:
protecting (S950) data stored in the object-storage slot using a protection key (620) corresponding to the DRM-system identifier.

14. The method of any of claims 8 to 13, further comprising:
extracting (S920) the DRM-system identifier from a retrieval-request message; and
retrieving the retrieval-requested data using the extracted DRM-system identifier, if the retrieval-request message is received from the host device (200).
